# EUROPEAN PATENT APPLICATION

(11) **EP 3 396 515 A1**
(43) Date of publication of application: **31.10.2018**
(21) Application number: 18158784.1
(22) Date of filing: 27.02.2018
(51) Int. Cl.: G06F 3/0487, G06F 3/0488

(54) **METHOD FOR DISPLAYING FINGERPRINT IDENTIFICATION AREA AND MOBILE TERMINAL**

(30) Priority: 28.04.2017 CN 201710294571
(71) Applicant: Guangdong Oppo Mobile Telecommunications Corp., Ltd., Dongguan, Guangdong 523860 (CN)
(72) Inventor: YANG, Le, Chang'an Dongguan, Guangdong (CN); ZHANG, Haiping, Chang'an Dongguan, Guangdong (CN)
(74) Representative: Johnson, Richard Alan

(57) **Abstract**

A method for displaying a fingerprint identification area (121) is provided. The method is applied to a mobile terminal (100) which includes a processor (110, 980), a touch display screen (120, 933), and a fingerprint identification sensor (130, 931). The touch display screen (120, 933) has a fingerprint identification area (121) for the fingerprint identification sensor (130, 931). The method includes: confirming a touch position of a touch operation on the touch display screen (120, 933); and highlighting the fingerprint identification area (121) on a condition that the touch position of the touch operation is not in the fingerprint identification area (121). A related mobile terminal (100) is also provided.

## Description

### CROSS-REFERENCE TO RELATED APPLICATIONS

This application claims priority to Chinese Patent Application No. 201710294571.4, filed on April 28, 2017, the content of which is hereby incorporated by reference in its entirety.

### TECHNICAL FIELD

The present disclosure relates to the field of mobile terminal technologies, and more particularly relates to a method for displaying a fingerprint identification area and a mobile terminal.

### BACKGROUND

With the popularization and application of smart-phones, more and more applications are supported by smart-phones, and the functions of the smart-phones are becoming more and more powerful. As smart-phones become more diversified and personalized, they become an indispensable electronic product in the user's life. More and more studies show that how software works and how users are using smart-phones as key factors in determining system energy consumption and efficiency.

At present, the smart phone mostly adopts fingerprint authentication scheme. The fingerprint identification sensor of the mobile phone is usually set in a separate area, for example, the Home button on the lower side of the mobile phone screen, or the back of the mobile phone. When authenticating the mobile phone based on the fingerprint, the user needs to touch or press the area of the fingerprint identification sensor with fingerprint surface of his/her finger, and the fingerprint identification sensor acquires the fingerprint data and completes the authentication operation after the fingerprint data is successfully matched.

### SUMMARY

Embodiments of the present disclosure provide a method for displaying a fingerprint identification area and a mobile terminal, to improve the accuracy and speed for entering fingerprint on the mobile terminal.

In a first aspect, an embodiment of the present disclosure provides a mobile terminal. The mobile terminal includes a processor, a touch display screen, and a fingerprint identification sensor. The touch display screen has a fingerprint identification area for the fingerprint identification sensor. The touch display screen is configured to confirm a touch position of a touch operation on the touch display screen. The processor is configured to highlight the fingerprint identification area on a condition that the touch position of the touch operation is not in the fingerprint identification area.

In a second aspect, an embodiment of the present disclosure provides a method for displaying a fingerprint identification area, which is applied to a mobile terminal. The mobile terminal includes a processor, a touch display screen, and a fingerprint identification sensor. The touch display screen having a fingerprint identification area for the fingerprint identification sensor. The method includes: confirming a touch position of a touch operation on the touch display screen; and highlighting the fingerprint identification area on a condition that the touch position of the touch operation is not in the fingerprint identification area.

In a third aspect, an embodiment of the present disclosure provides a mobile terminal. The mobile terminal includes a touch display screen, a processor, a fingerprint identification sensor, a memory and one or more programs. The touch display screen has a fingerprint identification area for the fingerprint identification sensor. The one or more programs are stored in the memory, and configured to be executed by the processor. The programs include instructions which are executed by the processor to perform some or all of the operations as described in any one of the method of the second aspect of the embodiment of the present disclosure.

In a fourth aspect, an embodiment of the present disclosure provides a computer-readable storage medium. The computer-readable storage medium stores computer programs for electronic data interchange. The computer programs are executed by a processor of a computer to perform some or all of the operations as described in any one of the method of the second aspect of the embodiment of the present disclosure.

### BRIEF DESCRIPTION OF THE DRAWINGS

To better illustrate the technical solutions of embodiments of the present disclosure or of the prior art, the following descriptions will briefly illustrate the accompanying drawings described in the embodiments or in the prior art. Obviously, the following described accompanying drawings are merely some embodiments of the present disclosure. Those skilled in the art can obtain other accompanying drawings according to the described accompanying drawings without creative efforts.
FIG. 1 is a structure diagram of a mobile terminal in accordance with an embodiment of the present disclosure.
FIG. 2 is a flow chart of a method for displaying a fingerprint identification area in accordance with an embodiment of the present disclosure.
FIG. 2-1 is a schematic diagram of the position of a fingerprint identification area in a touch display screen in accordance with an embodiment of the present disclosure.
FIG. 2-2 is a schematic diagram of a display effect of the fingerprint identification area in accordance with an embodiment of the present disclosure.

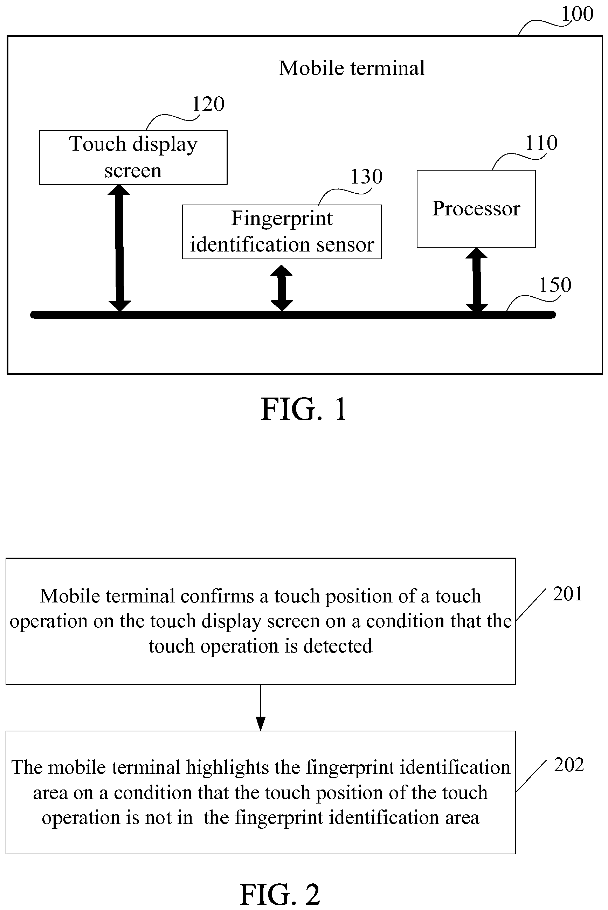

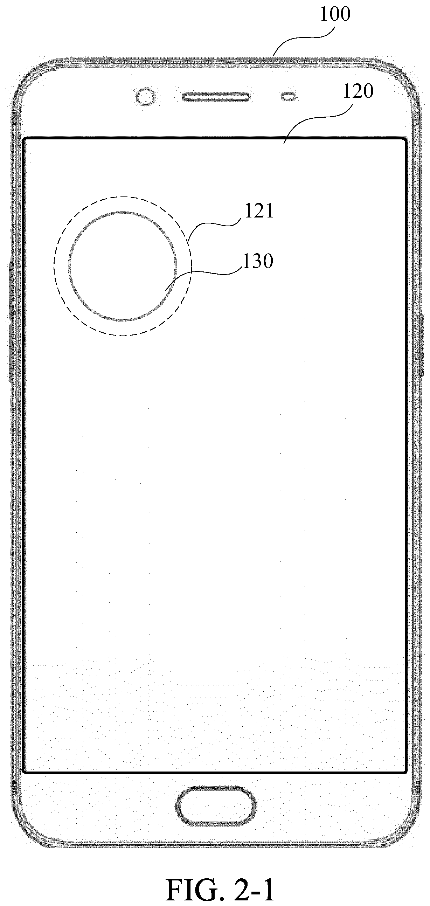

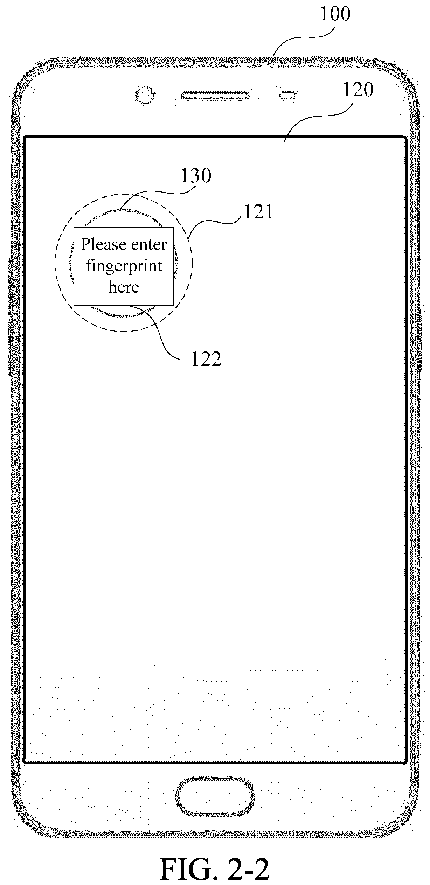

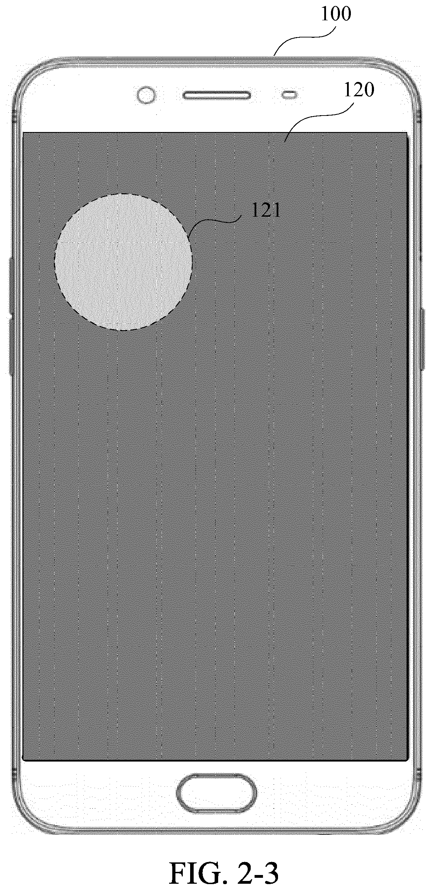

FIG. 2-3 is a schematic diagram of another display effect of the fingerprint identification area in accordance with an embodiment of the present disclosure.

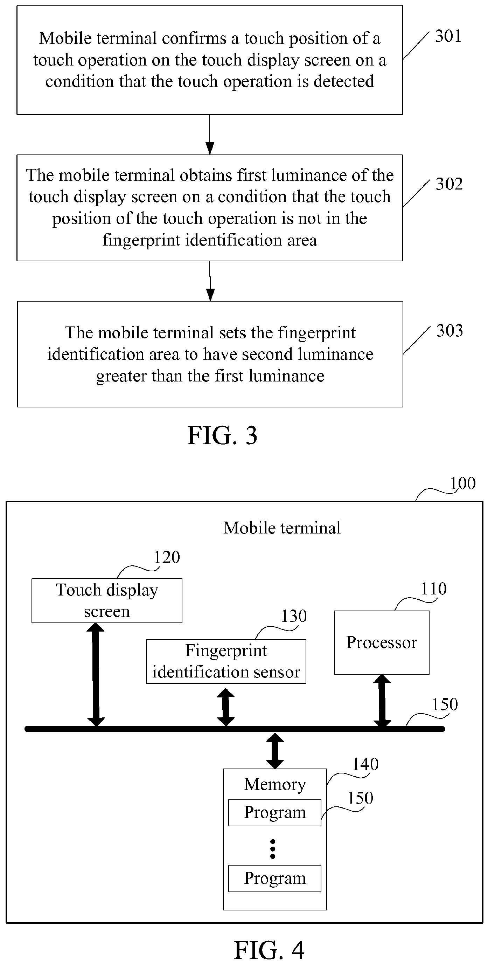

FIG. 3 is a flow chart of another method for displaying a fingerprint identification area in accordance with an embodiment of the present disclosure.
FIG. 4 is a block diagram of units of the mobile terminal in accordance with an embodiment of the present disclosure.

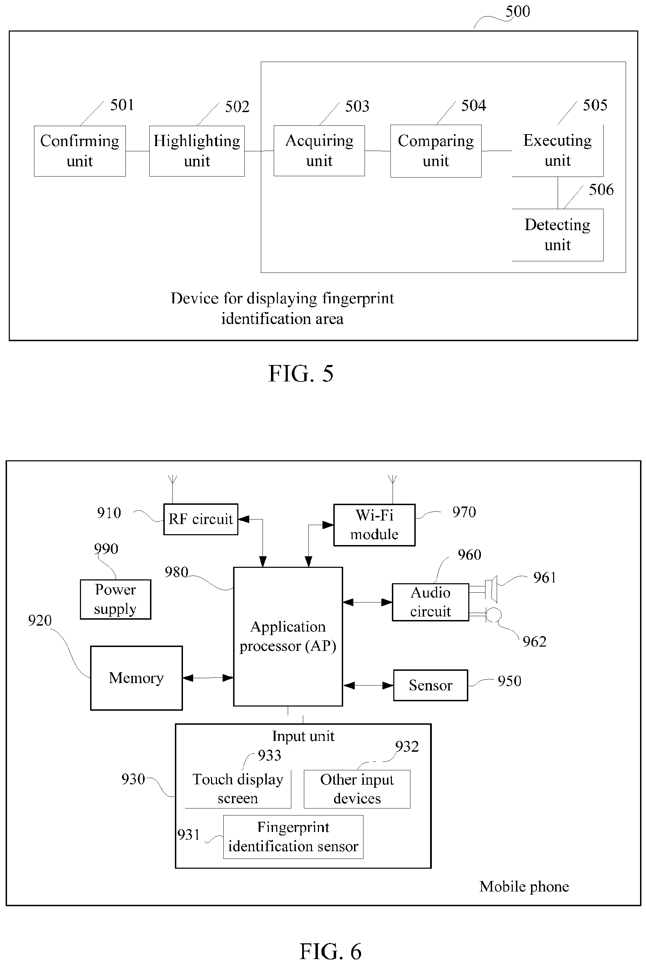

FIG. 5 is a block diagram of units of a device for displaying a fingerprint identification area in accordance with an embodiment of the present disclosure.
FIG. 6 is a structure diagram of a mobile phone in accordance with an embodiment of the present disclosure.

### DETAILED DESCRIPTION OF ILLUSTRATED EMBODIMENTS

In order to enable those skilled in the art to better understand the solutions of the present disclosure, the technical solutions of embodiments of the present disclosure will be described clearly and completely in combination with the accompanying drawings of the embodiments of the present disclosure. Obviously, the described embodiments are merely a part of embodiments of the present disclosure, but not all of the embodiments. All other embodiments obtained by those skilled in the art without creative efforts based on the embodiments of the present disclosure shall fall within the protection scope of the present disclosure.

Terms "first", "second", and so on used in the specification, claims and accompanying drawings of the present disclosure are used to distinguish different objects, rather than describe specific sequences. Additionally, term "comprising", "having", and any deformation thereof are intended to cover non-exclusive inclusion. For example, processes, methods, systems, products, or devices including a series of steps or units are not limited to listed steps or modules, but in at least one alternative embodiment, may include steps or units which are not listed, or in at least one alternative embodiment, may further include other inherent steps or units for these processes, methods, products, or devices.

The "embodiment" mentioned herein means that particular features, structures, or characteristic described with reference to the embodiments may be included in at least one embodiment of the present disclosure. Phrases appearing at various positions of the specification neither always refer to the same embodiment, nor separate or alternative embodiments that are mutually exclusive with other embodiments. It is explicitly and implicitly understood by those skilled in the art that the embodiments described herein may be combined with other embodiments.

A mobile terminal referred in the embodiments of the present disclosure may include various devices having wireless communication functions, such as handheld devices, in-vehicle devices, wearable devices, computing devices, or other processing devices connected to the wireless modem, as well as various forms of user equipment (UE), mobile station (MS), terminal device, and so on. For convenience of description, the devices mentioned above are collectively referred to as a mobile terminal. The embodiments of the present disclosure are described in detail below.

In order to better understand a method for displaying a fingerprint identification area and a mobile terminal, which are illustrated in the embodiments of the present disclosure, the embodiments of the present disclosure are described in detail below.

The present disclosure relates to a mobile terminal. The mobile terminal includes a processor, a touch display screen, and a fingerprint identification sensor. The touch display screen has a fingerprint identification area for the fingerprint identification sensor. The touch display screen is configured to confirm a touch position of a touch operation on the touch display screen. The processor is configured to highlight the fingerprint identification area on a condition that the touch position of the touch operation is not in the fingerprint identification area.

FIG. 1 is a structure diagram of a mobile terminal 100 in accordance with an embodiment of the present disclosure. The mobile terminal 100 includes a processor 110, a touch display screen 120, and a fingerprint identification sensor 130. The fingerprint identification sensor 130 is combined to the touch display screen 120. The touch display screen 120 has a fingerprint identification area for the fingerprint identification sensor 130. The processor 110 is connected to the touch display screen 120 and the fingerprint identification sensor 130 through a bus 150.

The touch display screen 120 is configured to confirm a touch position of a touch operation on the touch display screen on a condition that the touch operation is detected, and send the touch position to the processor 110.

The processor 110 is configured to highlight the fingerprint identification area on a condition that the touch position of the touch operation is not in the fingerprint identification area.

It can be seen that, in the embodiments of the present disclosure, the touch display screen has a fingerprint identification area for the fingerprint identification sensor. On a condition that a touch operation on the touch display screen is detected, the mobile terminal confirms a touch position of the touch operation. On a condition that the touch position of the touch operation is not in the fingerprint identification area, the mobile terminal highlights the fingerprint identification area. That is, on a condition that a touch operation on other area of the touch display screen is detected, the mobile terminal will highlight the fingerprint identification area, thereby guiding the user for fingerprint enrollment, which will be benefit to improve the accuracy and speed for entering fingerprint on the mobile terminal.

In some embodiments, the processor 110 configured to highlight the fingerprint identification area, is specifically configured to display a user interface in the fingerprint identification area, and the user interface is configured to guide the user for fingerprint enrollment.

It can be seen that, in this embodiment, the touch display screen has a fingerprint identification area for the fingerprint identification sensor. On a condition that a touch operation on the touch display screen is detected, the mobile terminal confirms the touch position of the touch operation. On a condition that the touch position of the touch operation is not in the fingerprint identification area, the mobile terminal displays a user interface in the fingerprint identification area, which is configured to promptly remind the user of the position of the fingerprint identification sensor, to guide the user for fingerprint enrollment.

In some embodiments, the processor 110 configured to highlight the fingerprint identification area, is specifically configured to obtain first luminance of the touch display screen 120, and set the fingerprint identification area to have second luminance greater than the first luminance, and the fingerprint identification area having the second luminance is configured to guide the user for fingerprint enrollment.

It can be seen that, in this embodiment, the touch display screen has a fingerprint identification area for the fingerprint identification sensor. On a condition that a touch operation on the touch display screen is detected, the mobile terminal confirms the touch position of the touch operation. On a condition that the touch position of the touch operation is not in the fingerprint identification area, the mobile terminal sets the fingerprint identification area to have luminance higher than the luminance of other areas except the fingerprint identification area of the touch display screen, thereby promptly reminding the user of the position of the fingerprint identification sensor, to guide the user for fingerprint enrollment.

In some embodiments, the touch display screen 120 is further configured to detect a touch operation on the fingerprint identification area.

The fingerprint identification sensor 130 is configured to acquire fingerprint data when the touch display screen has detected the touch operation on the fingerprint identification area, and send the fingerprint data to the processor 110.

The processor 110 is further configured to compare the fingerprint data with pre-stored fingerprint template data, and execute a preset operation on a condition that the fingerprint data successfully matches the pre-stored fingerprint template data.

It can be seen that, in this embodiment, the mobile terminal acquires the fingerprint data only when the mobile terminal has detected the touch operation on the fingerprint identification area, and compares the fingerprint data with pre-stored fingerprint template data, and executes a preset operation on a condition that the fingerprint data successfully matches the pre-stored fingerprint template data. The mobile terminal will not acquire the fingerprint data when other area except the fingerprint identification area in the touch display screen is touched. In this way, it can be avoided that the user mistakenly trigger the acquiring of the fingerprint data by inputting touch operations on other area except on the fingerprint identification area, thereby improving the accuracy and intelligence for entering fingerprint on the mobile terminal.

In some embodiments, the touch operation on the touch display screen is an operation of touching the touch display screen, with touch duration being greater than a preset threshold.

It can be seen that, in this embodiment, since the touch operation is an operation of touching the touch display screen, with touch duration being greater than a preset threshold, that is, the touch operation is not a conventional touch operation such as a single click, therefore, the user may be prevented from touching the fingerprint identification area by mistake to trigger the fingerprint data acquiring operation, to ensure that the fingerprint area of the user is in stable contact with the fingerprint identification area, to enable the fingerprint identification sensor can accurately acquiring the fingerprint data, and improve the accuracy for entering fingerprint, reduce power consumption, and improve the power usage efficiency of the mobile terminal.

In the embodiments of the present disclosure, on a condition that a touch operation on the touch display screen is detected, the mobile terminal confirms the touch position of the touch operation. On a condition that the touch position of the touch operation is not in the fingerprint identification area, the mobile terminal highlights the fingerprint identification area. That is, on a condition that the mobile terminal has detected the touch operation on other area of the touch display screen, the mobile terminal will highlight the fingerprint identification area, thereby guiding the user for fingerprint enrollment, which will be benefit to improve the accuracy and speed for entering fingerprint on the mobile terminal.

The present disclosure further relates to a method for displaying a fingerprint identification area, which is applied to a mobile terminal. The mobile terminal includes a processor, a touch display screen, and a fingerprint identification sensor. The touch display screen has a fingerprint identification area for the fingerprint identification sensor. The method includes: confirming a touch position of a touch operation; and highlighting the fingerprint identification area on a condition that the touch position of the touch operation is not in the fingerprint identification area.

FIG. 2 is a flow chart of a method for displaying a fingerprint identification area in accordance with an embodiment of the present disclosure. The method is applied to a mobile terminal, which includes a processor, a touch display screen, and a fingerprint identification sensor. The touch display screen has a fingerprint identification area for the fingerprint identification sensor. The method for displaying a fingerprint identification area in the embodiment of the present disclosure may include the operations at blocks illustrated in FIG. 2.

At block 201, the mobile terminal confirms a touch position of a touch operation on the touch display screen on a condition that the touch operation is detected.

As illustrated in FIG. 2-1, the mobile terminal 100 includes a touch display screen 120 and a fingerprint identification sensor 130. The touch display screen 120 has the fingerprint identification area 121 for the fingerprint identification sensor 130 of the mobile terminal 100. The fingerprint identification area 121 may be any one preset area in the touch display screen 120, and the preset area may be located at an upper left side of the touch display screen 120. In another embodiment, the preset area may also be located at an upper side, at a bottom side, at a left side, or at a right side of the touch display screen 120, which is not limited in the embodiment of the present disclosure.

In an embodiment, the touch display screen 120 includes a touch screen and a display screen. The touch screen is stacked on the display screen, with the display screen being arranged under a lower side of the touch screen. The fingerprint identification sensor 130 includes at least one fingerprint sensor. The fingerprint sensor is selected from a group consisting of an optical fingerprint sensor, a capacitive fingerprint sensor, and a ultrasonic fingerprint sensor.

On a condition that the fingerprint sensor is a capacitive fingerprint sensor, and the touch screen of the touch display screen is a capacitive touch screen, a specific form of the fingerprint identification sensor 130 being combined to the touch display screen 120 may be, for example, the fingerprint identification sensor 130 is integrated into the touch screen of the touch display screen 120. Specifically, a first sensing capacitor array of the fingerprint identification sensor 130 may be embedded in a second sensing capacitor array of the touch screen, and the sensing capacitors in the first sensing capacitor array are uniformly distributed in the fingerprint identification area 121.

On a condition that the fingerprint sensor is an optical fingerprint sensor, a specific form of the fingerprint identification sensor 130 being combined to the touch display screen 120 may be, for example, the fingerprint identification sensor 130 is integrated into the touch display screen 120. The fingerprint identification sensor 130 of the mobile terminal acquires user fingerprint data based on the pinhole imaging principle. A spacer layer between the touch screen and the display screen of the touch display screen 120 defines a first pinhole array layer in a first predetermined area. A driving circuit layer of the display screen defines an evenly distributed pinhole array in a second predetermined area of the driving circuit layer in a printing process. The evenly distributed pinhole array on the driving circuit layer serves as a second pinhole array layer, and the light transmission holes in the first pinhole array layer and the light transmission holes in the second pinhole array layer are in a one-to-one correspondence. The optical fingerprint sensor includes a charge-coupled device (CCD) array layer, the CCD array layer is configured for detecting light transmitted through the first pinhole array layer and the second pinhole array layer. The first predetermined area and the second predetermined area are both corresponding to the fingerprint identification area.

On a condition that the fingerprint sensor is an ultrasonic fingerprint sensor, a specific form of the fingerprint identification sensor 130 being combined with the touch display screen 120 may be, for example, a vacuum detection chamber is defined below the fingerprint identification area 121 of the touch display screen 120, and a number of ultrasonic sensors are uniformly arranged in the vacuum detection chamber. The ultrasonic sensors include ultrasonic signal transmitters and ultrasonic signal receivers. The ultrasonic signal transmitters are configured to emit signals of a specific frequency to detect user fingerprints, and the ultrasonic signal receivers is configured to receive echo signals reflected back. The operating principle of the ultrasonic sensors is to make use of the ability of the ultrasonic to penetrate the material and generate different sizes of echoes according to different materials (varying degrees of absorption, penetration and reflection when the ultrasonic wave reaches different material surfaces), and can distinguish the location of ridge and valley of the user's fingerprint surface.

The display screen may be a thin film transistor-liquid crystal display (TFT-LCD), a light emitting diode (LED) display, an organic light-emitting diode (OLED) display and so on.

At block 202, the mobile terminal highlights the fingerprint identification area on a condition that the touch position detected of the touch operation is not in the fingerprint identification area.

It can be seen that, in the embodiments of the present disclosure, the touch display screen has a fingerprint identification area for the fingerprint identification sensor. On a condition that a touch operation on the touch display screen is detected, the mobile terminal confirms a touch position of the touch operation. On a condition that the touch position of the touch operation is not in the fingerprint identification area, the mobile terminal highlights the fingerprint identification area. That is, on a condition that a touch operation on other area of the touch display screen is detected, the mobile terminal will highlight the fingerprint identification area, thereby guiding the user for fingerprint enrollment, which will be benefit to improve the accuracy and speed for entering fingerprint on the mobile terminal.

In some embodiments, the operation of highlighting the fingerprint identification area may specifically include: displaying a user interface in the fingerprint identification area, and the user interface is configured to guide the user for fingerprint enrollment.

Specifically, as illustrated in FIG. 2-2, the mobile terminal 100 displays an user interface 122 in the fingerprint identification area 121, and the user interface 122 is configured to guide the user for fingerprint enrollment on the position of the user interface 122. Content displayed in the user interface 122 is not limited in the embodiments of the present disclosure.

It can be seen that, in this embodiment, the touch display screen has a fingerprint identification area for the fingerprint identification sensor. On a condition that a touch operation on the touch display screen is detected, the mobile terminal confirms the touch position of the touch operation. On a condition that the touch position of the touch operation is not in the fingerprint identification area, the mobile terminal displays a user interface in the fingerprint identification area, which is configured to promptly remind the user of the position of the fingerprint identification sensor, to guide the user for fingerprint enrollment.

In some embodiments, the operation of highlighting the fingerprint identification area may specifically include: obtaining first luminance of the touch display screen, and setting the fingerprint identification area to have second luminance greater than the first luminance, and the fingerprint identification area having the second luminance is configured to guide the user for fingerprint enrollment.

Specifically, as illustrated in FIG. 2-3, the mobile terminal 100 sets the luminance of the fingerprint identification area 121 to the second luminance, according to the first luminance of other area except the fingerprint identification area, to make the fingerprint identification area be highlighted, thereby guiding the user to input the fingerprint operation.

It can be seen that, in this embodiment, the touch display screen has a fingerprint identification area for the fingerprint identification sensor. On a condition that a touch operation on the touch display screen is detected, the mobile terminal confirms the touch position of the touch operation. On a condition that the touch position of the touch operation is not in the fingerprint identification area, the mobile terminal sets the luminance of the fingerprint identification area to have luminance be higher than the luminance of other areas except the fingerprint identification area of the touch display screen, thereby promptly reminding the user of the position of the fingerprint identification sensor, to guide the user for fingerprint enrollment.

In some embodiments, the method further includes: detecting a touch operation on the fingerprint identification area, acquiring fingerprint data, comparing the fingerprint data with pre-stored fingerprint template data, and executing a preset operation on a condition that the fingerprint data successfully matches the pre-stored fingerprint template data.

It can be seen that, in this embodiment, the mobile terminal acquires the fingerprint data only when the mobile terminal has detected the touch operation on the fingerprint identification area, and compares the fingerprint data with pre-stored fingerprint template data, and executes a preset operation on a condition that the fingerprint data successfully matches the pre-stored fingerprint template data. The mobile terminal will not acquire the fingerprint data when other area except the fingerprint identification area in the touch display screen is touched. In this way, it can be avoided that the user mistakenly trigger the acquiring of the fingerprint data by inputting touch operations on other area except on the fingerprint identification area, thereby improving the accuracy and intelligence for entering fingerprint on the mobile terminal.

In some embodiments, the touch operation on the touch display screen is an operation of touching the touch display screen, with touch duration being greater than a preset threshold.

It can be seen that, in this embodiment, since the touch operation is an operation of touching the touch display screen, with touch duration being greater than a preset threshold, that is, the touch operation is not a conventional touch operation such as a single click, therefore, the user may be prevented from touching the fingerprint identification area by mistake to trigger the fingerprint data acquiring operation, to ensure that the fingerprint area of the user is in stable contact with the fingerprint identification area, to enable the fingerprint identification sensor can accurately acquiring the fingerprint data, and improve the accuracy for entering fingerprint, reduce power consumption, and improve the power usage efficiency of the mobile terminal.

FIG. 3 is a flow chart of another method for displaying a fingerprint identification area in accordance with an embodiment of the present disclosure. The method for displaying a fingerprint identification area in the embodiment of the present disclosure may include the operations at blocks illustrated in FIG. 3.

At block 301, the mobile terminal confirms a touch position of a touch operation on the touch display screen on a condition that the touch operation is detected.

At block 302, the mobile terminal obtains first luminance of the touch display screen on a condition that the touch position detected of the touch operation is not in the fingerprint identification area.

At block 303, the mobile terminal sets the fingerprint identification area to have second luminance greater than the first luminance, and the fingerprint identification area having the second luminance is configured to guide the user for fingerprint enrollment.

It can be seen that, in the embodiments of the present disclosure, the touch display screen has a fingerprint identification area for the fingerprint identification sensor. On a condition that a touch operation on the touch display screen is detected, the mobile terminal confirms the touch position of the touch operation. On a condition that the touch position of the touch operation is not in the fingerprint identification area, the mobile terminal obtains first luminance of the touch display screen, and sets the fingerprint identification area to have the second luminance greater than the first luminance, thereby promptly reminding the user of the position of the fingerprint identification sensor, to guide the user for fingerprint enrollment.

The present disclosure further relates to a mobile terminal. The mobile terminal includes a touch display screen, a processor, a fingerprint identification sensor, a memory and one or more programs. The touch display screen has a fingerprint identification area for the fingerprint identification sensor. The one or more programs are stored in the memory, and are configured to be executed by the processor. The programs include instructions which are executed by the processor to perform the following operations: confirming a touch position of a touch operation; and highlighting the fingerprint identification area on a condition that the touch position of the touch operation is not in the fingerprint identification area.

Referring to FIG. 4, a mobile terminal 100 is provided in an embodiment of the present disclosure. The mobile terminal 100 includes a touch display screen 120, a processor 110, a fingerprint identification sensor 130, a memory 140 and one or more programs 150. The fingerprint identification sensor 130 is provided with a fingerprint identification area located in a fingerprint identification area of the touch display screen 120. The one or more programs 150 are stored in the memory 140, and configured to be executed by one or more of the processors 110. The programs 150 include instructions which are executed by the processor to perform the following operations: confirming a touch position of a touch operation on the touch display screen on a condition that the touch operation is detected; and highlighting the fingerprint identification area on a condition that the touch position of the touch operation is not in the fingerprint identification area.

In some embodiments, the instructions included in the programs that are executed by the processor to perform the operation of highlighting the fingerprint identification area, are specifically executed by the processor to perform an operation of: displaying a user interface in the fingerprint identification area. The user interface is configured to guide the user for fingerprint enrollment.

In some embodiments, the instructions included in the programs that are executed by the processor to perform the operation of highlighting the fingerprint identification area, are specifically executed by the processor to perform the following operations: obtaining first luminance of the touch display screen, and setting the fingerprint identification area to have second luminance greater than the first luminance, and the fingerprint identification area having the second luminance is configured to guide the user for fingerprint enrollment.

In some embodiments, the instructions included in the programs are further executed by the processor to perform the following operations: detecting a touch operation on the fingerprint identification area, acquiring fingerprint data, comparing the fingerprint data with pre-stored fingerprint template data, and executing a preset operation on a condition that the fingerprint data successfully matches the pre-stored fingerprint template data.

In some embodiments, the touch operation on the touch display screen is an operation of touching the touch display screen, with touch duration being greater than a preset threshold.

It can be seen that, in the embodiments of the present disclosure, the touch display screen has a fingerprint identification area for the fingerprint identification sensor. On a condition that a touch operation on the touch display screen is detected, the mobile terminal confirms a touch position of the touch operation. On a condition that the touch position of the touch operation is not in the fingerprint identification area, the mobile terminal highlights the fingerprint identification area. That is, on a condition that a touch operation on other area of the touch display screen is detected, the mobile terminal will highlight the fingerprint identification area, thereby guiding the user for fingerprint enrollment, which will be benefit to improve the accuracy and speed for entering fingerprint on the mobile terminal.

The present disclosure further relates to a device for displaying a fingerprint identification area, which is applied to a mobile terminal. The mobile terminal includes a processor, a touch display screen, and a fingerprint identification sensor. The touch display screen has a fingerprint identification area for the fingerprint identification sensor. The device for displaying a fingerprint identification area includes a confirming unit and a highlighting unit. The confirming unit is configured to confirm a touch position of a touch operation on the touch display screen. The highlighting unit is configured to highlight the fingerprint identification area on a condition that the touch position of the touch operation is not in the fingerprint identification area.

FIG. 5 is a block diagram of units of a device 500 for displaying a fingerprint identification area in accordance with an embodiment of the present disclosure. The device 500 is applied to a mobile terminal, which includes a processor, a touch display screen, and a fingerprint identification sensor. The touch display screen has a fingerprint identification area for the fingerprint identification sensor. As illustrated in FIG. 5, the device 500 for displaying a fingerprint identification area may includes a confirming unit 501 and a highlighting unit 502.

The confirming unit 501 is configured to confirm a touch position of a touch operation on the touch display screen on a condition that the touch operation is detected. In an embodiment, the function of the confirming unit 501 may be performed by a processing chip or a processor.

The highlighting unit 502 is configured to highlight the fingerprint identification area on a condition that the touch position of the touch operation is not in the fingerprint identification area. In an embodiment, the function of the highlighting unit 502 may be performed by a processing chip or a processor.

In some embodiments, the highlighting unit 502 is specifically configured to display a user interface in the fingerprint identification area. The user interface is configured to guide the user for fingerprint enrollment.

In some embodiments, the highlighting unit 502 is specifically configured to obtain first luminance of the touch display screen, and set the fingerprint identification area to have second luminance greater than the first luminance, and the fingerprint identification area having the second luminance is configured to guide the user for fingerprint enrollment.

The device 500 for displaying a fingerprint identification area further includes an acquiring unit 503, a comparing unit 504, an executing unit 505, and a detecting unit 506. The detecting unit 506 is configured to detect a touch operation on the fingerprint identification area. The acquiring unit 503 is configured to acquire fingerprint data when the detecting unit 506 has detected the touch operation on the fingerprint identification area. The comparing unit 504 is configured to compare the fingerprint data with pre-stored fingerprint template data. The executing unit 505 is configured to execute a preset operation on a condition that the fingerprint data successfully matches the pre-stored fingerprint template data.

In an embodiment, the functions of the acquiring unit 503, the comparing unit 504, the executing unit 505, and the detecting unit 506 may be respectively performed by a processing chip or a processor.

In some embodiments, the touch operation on the touch display screen is an operation of touching the touch display screen, with touch duration being greater than a preset threshold.

Specific implementation of each unit described above may refer to the descriptions of related steps in the corresponding embodiment in FIG. 2 or FIG. 3, and details are not described herein again.

It should be noted that, the device 500 for displaying a fingerprint identification area described in the device embodiment of the present disclosure is presented in the form of a functional unit. As used herein, the term "unit" should be interpreted as being as widest as possible. Objects used to implement the functions described in each "unit" may be, for example, an integrated circuit ASIC, a single circuit, a processor (shared, dedicated, or chipset) and memory for executing one or more software or firmware programs, a combinational logic circuit, and/or other suitable components to accomplish the above-described functions.

For example, the function of the confirming unit 501 to confirm the touch position of the touch operation may be implemented by the mobile terminal 100 illustrated in FIG. 4. Specifically, the processor 110 invokes the executable program codes stored in the memory 140 to confirm the touch position of the touch operation on the touch display screen on a condition that the touch operation is detected.

It can be seen that, in the embodiments of the present disclosure, the touch display screen has a fingerprint identification area for the fingerprint identification sensor. On a condition that a touch operation on the touch display screen is detected, the mobile terminal confirms a touch position of the touch operation. On a condition that the touch position of the touch operation is not in the fingerprint identification area, the mobile terminal highlights the fingerprint identification area. That is, on a condition that a touch operation on other area of the touch display screen is detected, the mobile terminal will highlight the fingerprint identification area, thereby guiding the user for fingerprint enrollment, which will be benefit to improve the accuracy and speed for entering fingerprint on the mobile terminal.

As illustrated in FIG. 6, another mobile terminal is provided in an embodiment of the present disclosure. For the convenience of description, only parts related to the embodiments of the present disclosure are illustrated. For technical details that are not disclosed, reference may be made to the method embodiments of the present disclosure. The mobile terminal may be any terminal device selected from a group consisting of a mobile phone, a tablet computer, a personal digital assistant (PDA), a point of sale terminal (POS), an on-board computer. Taking a mobile terminal as a mobile phone, for example.

FIG. 6 illustrates a block diagram of a part of the structure of a mobile phone related to the mobile terminal provided by the embodiment of the present disclosure. Referring to FIG. 6, the mobile phone includes a radio frequency (RF) circuit 910, a memory 920, an input unit 930, a sensor 950, an audio circuit 960, a Wireless Fidelity (Wi-Fi) module 970, an application processor (AP) 980, and a power supply 990 and other components. Those skilled in the art should understand that, the structure of the mobile phone illustrated in FIG. 6 is not limit the mobile phone of the present disclosure. The structure can include more or less components, or some components can be combined, or components can be arranged in a different way.

Each component of the mobile phone will be specifically introduced below in combination with the accompanying FIG. 6.

The input unit 930 may be configured to receive input numerical or character information, and generate key signal inputs related to user settings and function controls of the mobile phone. Specifically, the input unit 930 may include a touch display screen 933 and a fingerprint identification sensor 931. The fingerprint identification sensor 931 is combined to a fingerprint identification area of the touch display screen 933, and the fingerprint identification sensor 931 is provided with a fingerprint identification area located in a fingerprint identification area of the touch display screen 933. The input unit 930 may further include other input devices 932. Specifically, the other input devices 932 may include, but are not limited to one or more of a physical key, a function key (such as a volume control key, a switch key, and so on), a trackball, a mouse, a joystick, and so on.

The AP 980 is a control center for the mobile phone that uses various interfaces and lines to connect various components of the mobile phone, performs various functions and processes data of the mobile phone by running or executing software programs and/or modules stored in the memory 920, and invoking data stored in the memory 920, thereby overall monitoring the mobile phone. Alternatively, The AP 980 may include one or more processing units. Preferably, the AP 980 may integrate an application processor and a modem processor. The application processor mainly deals with the operating system, user interface, application programs, and so on. The modem processor mainly deals with wireless communication. It should be understood that, the above modem processor may also not be integrated into the AP 980.

The memory 920 may be configured to store an Android system and lock screen application. The Android system includes a fingerprint service and a power management service (PMS). In addition, the memory 920 may include a high-speed random access memory, and may further include non-transitory storage device, such as at least one magnetic disk storage device, flash memory device, or other transitory solid-state storage device.

The RF circuit 910 may be configured for the reception and transmission of information. In general, the RF circuit 910 includes, but not limited to, an antenna, at least one amplifier, a transceiver, a coupler, a low noise amplifier (LNA), a duplexer, and so on. In addition, the RF circuit 910 may also communicate with the network and other devices by wireless communication. The above wireless communication may use any communication standard or protocol, which includes, but not limited to Global System of Mobile communication (GSM), General Packet Radio Service (GPRS), Code Division Multiple Access (CDMA), Wideband Code Division Multiple Access (WCDMA), Long Term Evolution (LTE), e-mail, Short Messaging Service (SMS), and so on.

The mobile phone may further include at least one sensor 950, such as a light sensor, a motion sensor, and other sensors. Specifically, the light sensor may include an ambient light sensor and a proximity sensor. The ambient light sensor may adjust the luminance of the touch display screen according to the luminance of ambient light. The proximity sensor may turn off the touch display screen and/or backlight when the mobile phone is near the ear. As a kind of motion sensor, the accelerometer sensor can detect the acceleration in all directions (usually three axes), and can detect the magnitude and direction of gravity at rest. The accelerometer sensor can be used to identify the gesture of the mobile phone (such as horizontal and vertical screen switching, related Games, magnetometer attitude calibration), vibration identification related functions (such as pedometer, percussion), and so on. The mobile phone can also be equipped with other sensors, such as gyroscopes, barometers, hygrometers, thermometers, infrared sensors, and so on, and details are not described herein again.

The mobile phone may further include a speaker 961 and microphone 962 receptively connected to the audio circuitry 960. The audio circuitry 960, the speaker 961, and microphone 962 provide audio interfaces between the user and the mobile phone. The audio circuit 960 may convert received audio data into an electrical signal, and transmit the electrical signal to the speaker 961, and then the electrical signal is converted into a sound signal for playing by the speaker 961. On the other hand, the microphone 962 converts collected sound signal into an electrical signal, which is received by the audio circuit 960 and is converted into an audio signal. The audio signal is played and processed by the AP 980, and then is sent to another mobile phone via the RF circuit 910, for example. Or, the audio data is stored in the memory 920 for further processing.

Wi-Fi is a short-range wireless transmission technology. With the Wi-Fi module 970, the mobile phone can help users send and receive e-mail, browse the web, access streaming media, and so on, which provides users with wireless broadband Internet access. Although the Wi-Fi module 970 is illustrated in FIG. 6, however, it should be understood that, the Wi-Fi module 970 is not a necessary component of a mobile phone, and can be completely omitted as needed without changing the essence of the invention.

The mobile phone further includes a power supply 990 (such as a battery) for powering various components. Preferably, the power supply can be logically connected to the AP980 via a power management system, to manage charging, discharging, power management functions, and so on, through the power management system.

Although not illustrated, the mobile phone may further include a camera, a Bluetooth module, and so on, and details are not described herein again.

In the foregoing embodiments illustrated in FIG. 2 or FIG. 3, each operation of the method may be implemented based on the structure of the mobile phone.

In the foregoing embodiment illustrated in FIG. 5, function of each unit may be implemented based on the structure of the mobile phone.

An embodiment of the present disclosure further provides a computer-readable storage medium. The computer-readable storage medium stores computer programs for electronic data interchange. The computer programs are executed by a processor to perform some or all of the operations of any one of the method for displaying a fingerprint area as described in the above method embodiments.

An embodiment of the present disclosure further provides a computer program product. The computer program product includes a non-transitory computer-readable storage medium for storing computer programs. The computer programs are executed by a processor to execute some or all of the operations of any one of the method for displaying a fingerprint area as described in the above method embodiments.

It should be noted that, for the foregoing method embodiments, for a brief description, all of the method embodiments are described as a series of operation combinations. However, those skilled in the art should understand that the present disclosure is not limited by the described sequence of operations, as certain steps may be performed in other sequences or concurrently according to the present disclosure. Secondly, those skilled in the art should also know that the embodiments described in the specification belong to the preferred embodiments, and the actions and modules involved are not necessarily required by the present disclosure.

In the foregoing embodiments, descriptions of each embodiment are emphasized respectively, and parts which are not elaborated in a certain embodiment may subject to relevant descriptions of other embodiments.

In the embodiments provided in the present disclosure, it should be understood that, the device disclosed may be implemented in other ways. For example, the device embodiments described above are merely illustrative, for instance, the division of the unit is only a logical function division and there can be another way of division during actual implementations, for example, multiple units or components may be combined or may be integrated into another system, or some features may be ignored or not performed. In addition, coupling or communication connection between each displayed or discussed component may be direct coupling or communication connection, or may be indirect coupling or communication among devices or units via some interfaces, and may be electrical and mechanical or adopt other forms.

The units described as separate components may or may not be physically separate, the components illustrated as units may or may not be physical units, and namely they may be in the same place or may be distributed to multiple network units. Part or all of the units may be selected per actual needs to achieve the purpose of the technical solutions of the embodiments.

In addition, the functional units in various embodiments of the present disclosure may be integrated in one processing unit, or each unit may be physically present, or two or more units may be integrated in one unit. The above-mentioned integrated unit may be implemented in the form of hardware, or in the form of hardware plus software function unit.

The integrated units may be stored in a computer-readable storage medium, if the integrated units are implemented in the form of software functional modules and sold or used as an independent product. Based on this understanding, the technical solution of the present disclosure essentially, or the part contributing to the prior art, or all or a part of the technical solution may be implemented in the form of a software product. The computer software product is stored in a storage medium, and includes several instructions for causing a computer device (which may be a personal computer, a server, a network device and so on) to execute some or all of the steps of the method according to each embodiment of the present disclosure. The foregoing storage medium includes various media capable of storing program codes, such as a USB disk, a read-only memory (ROM), a random access memory (RAM), a removable hard disk, a magnetic disk, or an optical disk and so on.

Those skilled in the art should understand that all or part of the steps of the various methods in the foregoing embodiments may be implemented by a program instructing relevant hardware. The program may be stored in a computer-readable memory, and the memory may include a flash disk, a ROM, a RAM, a magnetic disk, or an optical disk and so on.

The embodiments of the present disclosure are described in detail above, specific examples are used herein to describe the principle and implementation manners of the present disclosure. The description of the above embodiments is merely used to help understand the method and the core idea of the present disclosure. Meanwhile, those skilled in the art may make modifications to the specific implementation manners and the application scope according to the idea of the present disclosure. In summary, the contents of the specification should not be construed as limiting the present disclosure.

## Claims

1. A mobile terminal (100) comprising a processor (110, 980), a touch display screen (120, 933), and a fingerprint identification sensor (130, 931), the touch display screen (120, 933) having a fingerprint identification area (121) for the fingerprint identification sensor (130, 931);
wherein the touch display screen (120, 933) is configured to confirm a touch position of a touch operation on the touch display screen (120, 933); and
the processor (110, 980) is configured to highlight the fingerprint identification area (121) on a condition that the touch position of the touch operation is not in the fingerprint identification area.

2. The mobile terminal (100) according to claim 1, wherein the processor (110, 980) is further configured to display a user interface (122) in the fingerprint identification area, and the user interface (122) is configured to guide the user for fingerprint enrollment.

3. The mobile terminal (100) according to claim 1, wherein the processor (110, 980) is further configured to:
obtain first luminance of the touch display screen (120, 933); and
set the fingerprint identification area (121) to have second luminance greater than the first luminance, and the fingerprint identification area (121) having the second luminance is configured to guide the user for fingerprint enrollment.

4. The mobile terminal (100) according to any one of claims 1 to 3, wherein the touch display screen (120, 933) is further configured to detect the touch operation on the fingerprint identification area (121);
the fingerprint identification sensor (130, 931) is configured to acquire fingerprint data when the touch display screen (120, 933) has detected the touch operation on the fingerprint identification area (121);
the processor (110, 980) is further configured to compare the fingerprint data with pre-stored fingerprint template data, and execute a preset operation on a condition that the fingerprint data successfully matches the pre-stored fingerprint template data.

5. The mobile terminal (100) according to any one of claims 1 to 4, wherein the touch operation on the touch display screen (120, 933) is an operation of touching the touch display screen (120, 933), with touch duration being greater than a preset threshold.

6. The mobile terminal (100) according to claim 5, wherein the fingerprint identification sensor (130, 931) comprises at least one fingerprint sensor, which is selected from a group consisting of an optical fingerprint sensor, a capacitive fingerprint sensor, and a ultrasonic fingerprint sensor.

7. The mobile terminal (100) according to claim 1, wherein the fingerprint identification area (121) is a preset area in the touch display screen (120, 933), and the preset area is located at an upper left side, at an upper side, at a bottom side, at a left side, or at a right side of the touch display screen (120, 933).

8. A method for displaying a fingerprint identification area (121) using a mobile terminal (100), the mobile terminal (100) comprising a processor (110, 980), a touch display screen (120, 933), and a fingerprint identification sensor (130, 931), the touch display screen (120, 933) having a fingerprint identification area (121) for the fingerprint identification sensor (130, 931), the method comprising:
confirming a touch position of a touch operation on the touch display screen (120, 933); and
highlighting the fingerprint identification area (121) on a condition that the touch position of the touch operation is not in the fingerprint identification area (121).

9. The method according to claim 8, wherein the method further comprises:
displaying a user interface (122) in the fingerprint identification area (121), and the user interface (122) is configured to guide the user for fingerprint enrollment.

10. The method according to claim 8, wherein the method further comprises:
obtaining first luminance of the touch display screen (120, 933); and
setting the fingerprint identification area (121) to have second luminance greater than the first luminance, and the fingerprint identification area (121) having the second luminance is configured to guide the user for fingerprint enrollment.

11. The method according to any one of claims 8 to 10, further comprising:
detecting the touch operation on the fingerprint identification area (121);
acquiring fingerprint data; and
comparing the fingerprint data with pre-stored fingerprint template data, and executing a preset operation on a condition that the fingerprint data successfully matches the pre-stored fingerprint template data.

12. The method according to any one of claims 8 to 11, wherein the touch operation on the touch display screen (120, 933) is an operation of touching the touch display screen (120, 933), with touch duration being greater than a preset threshold.

13. The method according to claim 8, wherein the fingerprint identification area (121) is a preset area in the touch display screen (120, 933), and the preset area is located at an upper left side, at an upper side, at a bottom side, at a left side, or at a right side of the touch display screen (120, 933).

14. A mobile terminal (100) comprising a touch display screen (120, 933), a processor (110, 980), a fingerprint identification sensor (130, 931), a memory (140, 920), and one or more programs (150), wherein the touch display screen (120, 933) has a fingerprint identification area (121) for the fingerprint identification sensor (130, 931), the one or more programs (150) are stored in the memory, and are configured to be executed by the processor (110, 980), the programs (150) comprise instructions which are executed by the processor (110, 980) to perform the operations of the method of any one of claims 8 to 13.

15. A computer-readable storage medium having stored thereon computer programs for electronic data interchange, wherein the computer programs being executed by a processor of a computer to perform the method of any one of claims 8 to 13.
